# EUROPEAN PATENT APPLICATION

(11) **EP 4 215 496 A1**
(43) Date of publication of application: **26.07.2023**
(21) Application number: 22213909.9
(22) Date of filing: 15.12.2022
(51) Int. Cl.: C02F 1/42, C02F 1/68, C02F 5/00, C02F 5/08

(54) **WATER SOFTENER FOR A PLUMBING SYSTEM**

(30) Priority: 21.01.2022 IT 202200000971
(71) Applicant: ACQUA BREVETTI S.R.L., 35035 Mestrino (PD) (IT)
(72) Inventor: BARBIERI, Graziano, 35035 MESTRINO PD (IT)
(74) Representative: Modiano, Micaela Nadia

(57) **Abstract**

A water softener (10) for a plumbing system, comprising:
- a container (11) which is closed upward by a lid (12),
- an ion exchange cylinder (13) inside the container (11), adapted to be fluidically connected:
- to a first inlet duct (14) for the water that arrives from a plumbing system,
- to a second outlet duct (15) for the water that arrives from the plumbing system;
the water softener comprises a dosage pump (16) which is integrated within the container (11) for the dosage of an anticorrosion and/or scale inhibiting and/or disinfectant substance (30), adapted to be in fluidic connection with the second duct (15).

## Description

The present invention relates to a water softener for a plumbing system.

The invention is used in the industrial and domestic field, in the field of devices for treating water in plumbing systems.

Currently, water from the water distribution network of industrial and domestic users can have a high and harmful concentration of calcium and magnesium salts, which results in an excessive hardness thereof.

In the present description, the expression "water hardness" is understood to mean a value expressing the total content of calcium and magnesium ions due to the presence of water-soluble salts and any heavy metals present in the water.

Due to water hardness, plumbing systems for heating and supplying sanitary water are subject to the danger of scaling and corrosion due to the presence of these salts, which can precipitate, forming limescale deposits.

These limescale deposits are harmful because they can cause damage to boilers, water heaters, system pipes and other electrical household appliances that need water from the water distribution network to operate.

For these reasons, it is now common to introduce in plumbing systems substances adapted to obtain the suspension of calcium and magnesium salts and/or water softeners that promote the removal of the ions that determine water hardness.

A water softener is a device for exchanging specific ions, which is adapted to remove calcium and magnesium ions from the water in input and replace them with other types of ions, for example sodium and potassium ions, in the water in output.

The water softener comprises a container inside which there is a bed of cationic resins.

The hard water that arrives from the water mains enters the container, on one side, passes through the bed of resins and exits softened on the other side.

The resins act as ion exchange material.

In practice, the resins have a negative charge, while the calcium and magnesium ions, dissolved in the water in input, instead have a positive charge.

The water flow of the system passes through the water softener and, during its passage, the resins attract and become charged of the calcium and magnesium ions and while concurrently releasing sodium ions.

This process leads to a progressive exhaustion of the exchange power of the resins, which makes regeneration with sodium chloride in an aqueous solution (brine) necessary.

The brine solution is generally contained in a container from which, by means of an adapted programmable valve, the system draws it to regenerate the resins by means of a reverse process: thanks to the passage of the brine, constituted by sodium chloride, i.e., chloride and sodium ions, the resins recharge with the sodium that they had previously exchanged and operate again.

In addition, in order to protect the plumbing system from limescale and corrosion and to prevent the forming of molds and bacterial colonies, the use of a dosage pump, which is adapted to dose and introduce an anticorrosion and/or scale inhibiting and/or disinfectant substance into the system, is known and widespread.

The dosage pump comprises an inlet for the water that arrives from the system and an outlet for reintroducing it therein, and a tank for drawing the anticorrosion and/or scale inhibiting and/or disinfectant substance.

Such device is a volumetric pump that introduces a certain amount of anticorrosion and/or scale inhibiting and/or disinfectant substance into the outlet water in proportion to the water flow rate detected at the inlet.

Usually, the dosage pump is installed proximate to or at the boiler or proximate to the water softener.

This background art has some disadvantages.

In fact, usually the dosage pump and the water softener are separate components installed at different points in the system, and this results in a large overall space occupation and an unpleasant visual impact.

Furthermore, if it is necessary to perform maintenance on both the water softener and the dosage pump, it is necessary to move between one intervention and the other, and this causes lengthy and awkward operations.

The aim of the present invention is to provide a water softener for a plumbing system that is capable of overcoming the drawbacks of the background art in one or more of the aspects mentioned above.

Within this aim, an object of the invention is to provide a water softener for a plumbing system that allows to reduce the overall space occupation with respect to similar systems with water softeners and dosage pumps of the known type.

Another object of the invention is to provide a water softener for a plumbing system that does not require moving in case of maintenance to be performed on both the water softener and the dosage pump, resulting in easier and faster operations.

A further object of the present invention is to provide a water softener for a plumbing system that overcomes the drawbacks of the background art in a manner that is alternative to any existing solutions.

Not least object of the invention is to provide a water softener that is highly reliable, relatively easy to provide and at competitive costs.

This aim and these and other objects which will become better apparent hereinafter are achieved by a water softener for a plumbing system, comprising:
- a container which is closed upward by a lid,
- an ion exchange cylinder inside said container, adapted to be fluidically connected:
- to a first inlet duct for the water that arrives from a plumbing system,
- to a second outlet duct for the water that arrives from said plumbing system,
   said water softener being characterized in that it comprises a dosage pump which is integrated within said container for the dosage of an anticorrosion and/or scale inhibiting and/or disinfectant substance, adapted to be in fluidic connection with said second duct.

Further characteristics and advantages of the invention will become better apparent from the description of a preferred but not exclusive embodiment of the water softener for a plumbing system, according to the invention, illustrated by way of non-limiting example in the accompanying drawings, wherein:

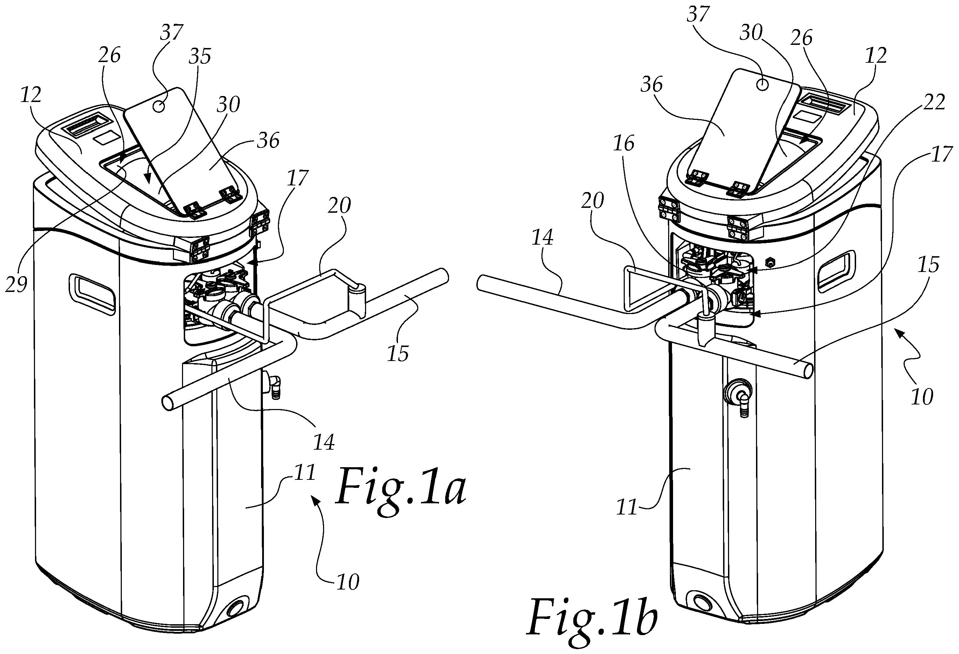

Figures 1a and 1b are two different general perspective views of a water softener for a plumbing system, according to the invention;

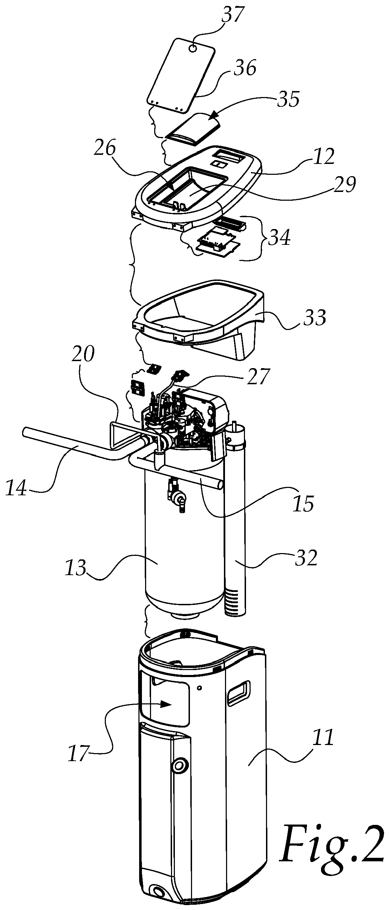

Figure 2 is an exploded view of the water softener of Figures 1a and 1b;

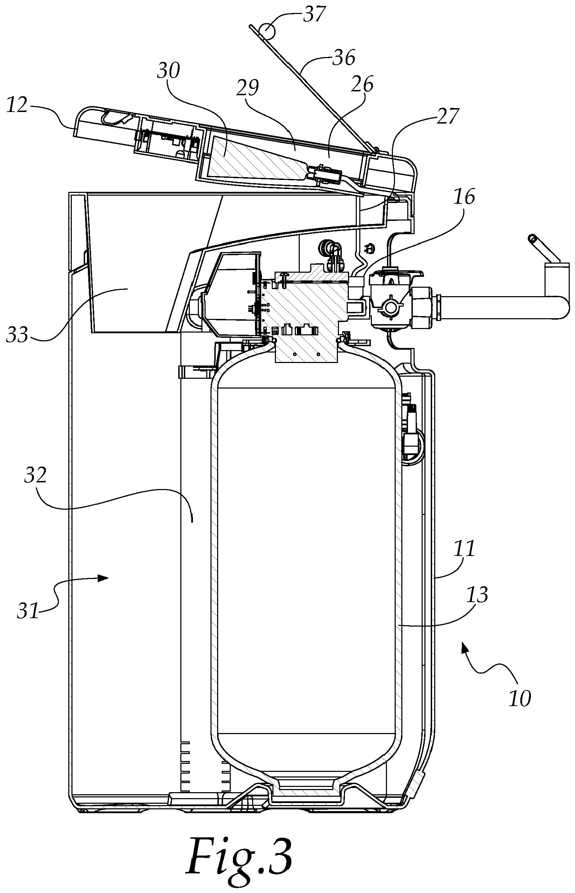

Figure 3 is a sectional view of the water softener of Figures 1a and 1b;

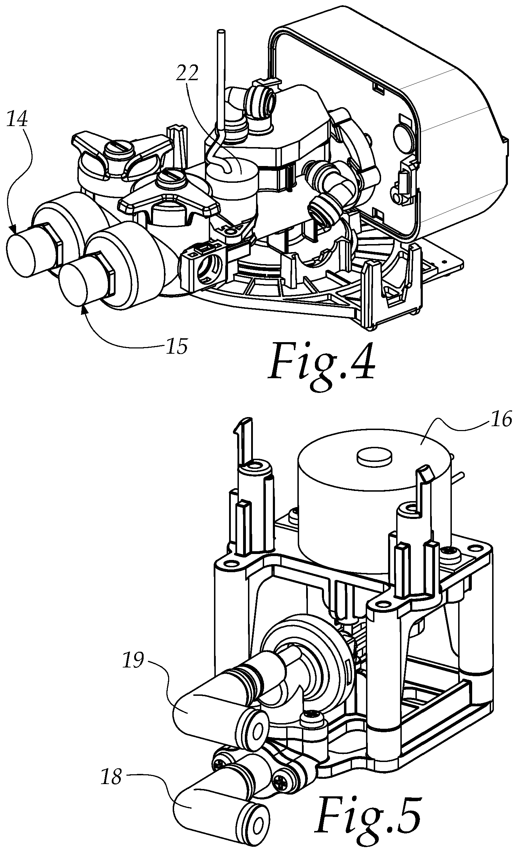

Figure 4 is a view of a portion of the water softener of Figures 1a and 1b;
Figure 5 is a general perspective view of a component of the water softener of Figures 1a and 1b;

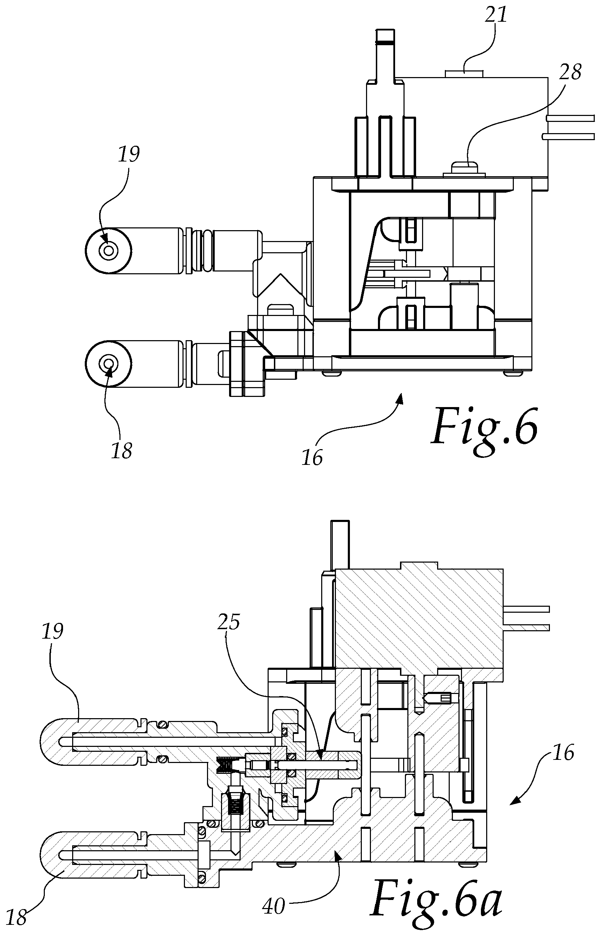

Figure 6 is a side view of the component of Figure 5;
Figure 6a is a first sectional view of the component of Figure 5;

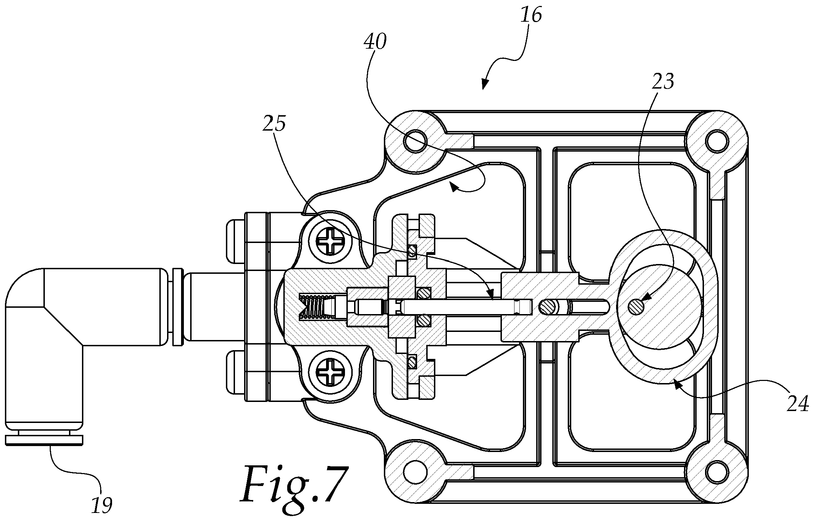

Figure 7 is a second sectional view of the component of Figure 5.

With reference to the figures, a water softener for a plumbing system, according to the invention, is generally designated by the reference numeral 10.

The water softener 10 comprises:
- a container 11 which is closed upward by a lid 12,
- an ion exchange cylinder 13 inside the container 11, which is fluidically connected:
- to a first inlet duct 14 for the water that arrives from the plumbing system, not shown in the figures,
- to a second outlet duct 15 for the water that arrives from the plumbing system.

The cylinder 13 contains a bed of cationic resins and is fluidically connected to the first duct 14 and to the second duct 15 through a lateral opening 17 which is present on the container 11.

One of the particularities of the water softener 10 resides in that it comprises a dosage pump 16, integrated within the container 11, in fluidic connection with the second duct 15.

The dosage pump 16 is adapted to dose an anticorrosion and/or scale inhibiting and/or disinfectant substance 30 and to introduce it in the water in output from the water softener 10, through the second duct 15.

In particular, the dosage pump 16 is provided with:
- an intake duct 18 for the anticorrosion and/or scale inhibiting and/or disinfectant substance 30, which is fluidically connected to a tank 26 of the substance 30 by means of a connecting duct 27,
- a duct 19 for the delivery of the anticorrosion and/or scale inhibiting and/or disinfectant substance 30, which is fluidically connected to the second duct 15 by means of an injection duct 20.

The dosage pump 16 is a volumetric electric pump, driven by an electric step motor 21, with a variable flow rate which is proportional to the frequency of the impulses sent by a Hall effect sensor of a flow meter 22 which is fluidically interposed between the first duct 14 and the second duct 15.

The shaft 28 in output from the electric motor 21 has an eccentric element 23, which is kinematically connected to a linkage 24, which in turn is kinematically connected to a piston 25 which operates within a pumping chamber 40 of the dosage pump 16.

During operation, the electric motor 21 moves the eccentric element 23, which actuates the linkage 24, which alternately moves the piston 25 in one direction and then in the opposite direction.

The reciprocating motion of the piston 25 results in:
- first a suction of the anticorrosion and/or scale inhibiting and/or disinfectant substance 30 through the intake duct 18,
- then a delivery of said substance through the delivery duct 19 and then its injection into the second duct 15 by means of the injection duct 20.

In particular, the lid 12 has a compartment 29 which forms the tank 26 for the anticorrosion and/or scale inhibiting and/or disinfectant substance 30.

Inside the container 11 there is also a vessel 31 for the containment of brine, not shown in the figures, in controlled fluidic connection with the cylinder 13.

The vessel 31 and the cylinder 13 are conveniently connected in a per se known manner by means of a valve, not shown in the figures, and a brine suction tube 32.

The water softener 10 comprises a hopper body 33 for loading salt for the brine into the vessel 31, arranged below the lid 12.

The dosage pump 16 is arranged above the cylinder 13 and is interposed between the cylinder 13 and the lid 12.

In particular, the dosage pump 16 is interposed between the hopper body 33, to which it is integral, and the cylinder 13.

The water softener 10 comprises an electronic assembly 34, provided with an electronic board which manages the entire operation of the water softener 10 and of the dosage pump 16.

The anticorrosion and/or scale inhibiting and/or disinfectant substance 30 is preferably in liquid form and contained in a replaceable bag 35 which is accommodated inside the compartment 29 and is connected to the dosage pump 16 by means of the connecting duct 27.

Advantageously, the lid 12 comprises a door 36 for access to the compartment 29.

The door 36 allows, when it is closed, to completely conceal the bag 35 inside the lid 12, closing it inside the compartment 29.

The door 36, the container 11, and the lid 12 are made of plastic and/or metallic material.

The door 36 is provided with a grip knob 37.

The lid 12 is hinged to the container 11, on the same side for fluidic connection with the first duct 14 and the second duct 15, therefore proximate to/at the opening 17.

Such door 36 is hinged to the lid 12 proximate to the hinging area of said lid to the container 11.

The operation of the water softener 10, according to the invention, is as follows.

The water to be treated enters the water softener 10, and the cylinder 13, by means of the first duct 14, passes through the bed of cationic resins, exchanging calcium and magnesium ions with sodium ions, and softened water exits through the second duct 15.

At the same time, the dosage pump 16 injects a quantity of anticorrosion and/or scale inhibiting and/or disinfectant substance 30 proportional to the water flow rate measured by the flow meter 22 into the softened water in the second duct 15 through the injection duct 20.

In practice it has been found that the invention achieves the intended aim and objects, providing a water softener for a plumbing system that allows to reduce the overall space occupation compared to similar systems with water softeners and dosage pumps of the known type.

The invention provides a water softener for a plumbing system that does require one to move in case of maintenance to be performed on both the water softener and the dosage pump, resulting in faster and easier operations.

The invention thus conceived is susceptible of numerous modifications and variations, all of which are within the scope of the appended claims; all the details may furthermore be replaced with other technically equivalent elements.

In practice, the materials used, so long as they are compatible with the specific use, as well as the contingent shapes and dimensions, may be any according to the requirements and the state of the art.

The disclosures in Italian Patent Application No. 102022000000971 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A water softener (10) for a plumbing system, comprising:
- a container (11) which is closed upward by a lid (12),
- an ion exchange cylinder (13) inside said container (11), adapted to be fluidically connected:
- to a first inlet duct (14) for the water that arrives from a plumbing system,
- to a second outlet duct (15) for the water that arrives from said plumbing system,
said water softener (10) being **characterized in that** it comprises a dosage pump (16) which is integrated within said container (11) for the dosage of an anticorrosion and/or scale inhibiting and/or disinfectant substance (30), adapted to be in fluidic connection with said second duct (15).

2. The water softener (10) according to claim 1, **characterized in that** said dosage pump (16) is provided with:
- a duct (18) for the intake of said anticorrosion and/or scale inhibiting and/or disinfectant substance (30), fluidically connected to a tank (26) of said substance (30) by means of a connecting duct (27),
- a duct (19) for the delivery of said anticorrosion and/or scale inhibiting and/or disinfectant substance (30), which is adapted to be fluidically connected to said second duct (15) by means of an injection duct (20).

3. The water softener (10) according to one or more of the preceding claims, **characterized in that** said dosage pump (16) is a volumetric electric pump, actuated by an electric step motor (21) with variable flow rate, which is proportional to the frequency of the impulses sent by a flow meter (22) which is fluidically interposed between said first duct (14) and said second duct (15).

4. The water softener (10) according to claim 3, **characterized in that** said flow meter (22) comprises a Hall effect sensor.

5. The water softener (10) according to one or more of the preceding claims, **characterized in that** the output shaft (28) from said electric motor (21) has an eccentric element (23) which is kinematically connected to a linkage (24), which in turn is kinematically connected to a piston (25) which operates inside a pumping chamber (40) of said dosage pump (16).

6. The water softener (10) according to one or more of the preceding claims, **characterized in that** said lid (12) has a compartment (29) which forms said tank (26) for said anticorrosion and/or scale inhibiting and/or disinfectant substance (30).

7. The water softener (10) according to one or more of the preceding claims, **characterized in that** inside said container (11) there is a vessel (31) for the containment of brine in controlled fluidic connection with said cylinder (13), said vessel (31) and said cylinder (13) being connected by means of a valve and a suction tube (32) for said brine.

8. The water softener (10) according to one or more of the preceding claims, **characterized in that** it comprises a hopper body (33) for loading salt for the brine into said vessel (31) arranged below said lid (12).

9. The water softener (10) according to one or more of the preceding claims, **characterized in that** said dosage pump (16) is arranged above said cylinder (13) and is interposed between said cylinder (13) and said lid (12).

10. The water softener (10) according to one or more of the preceding claims, **characterized in that** it comprises an electronic assembly (34) provided with an electronic board for the management of the operation of said water softener (10) and of said dosage pump (16).
